# EUROPEAN PATENT APPLICATION

(11) **EP 3 861 856 A1**
(43) Date of publication of application: **11.08.2021**
(21) Application number: 19797766.3
(22) Date of filing: 19.09.2019
(51) Int. Cl.: A01M 7/00, B05B 12/00

(54) **DEVICE FOR CONTROLLING THE APPLICATION OF INSECTICIDES FOR INDOOR RESIDUAL SPRAYING USING A SPRAYER, AND METHOD OF APPLYING INSECTICIDES FOR INDOOR RESIDUAL SPRAYING USING SAID DEVICE**

(30) Priority: 02.10.2018 WO PCT/ES2018/070632
(71) Applicant: Goizper, S.Coop., 20577 Antzuola (Gipuzkoa) (ES)
(72) Inventor: GARMENDIA OYARBIDE, Iñigo, 20213 IDIAZABAL (GIPUZKOA) (ES)
(74) Representative: Durán-Corretjer, S.L.P.
(86) International application number: PCT/ES2019/070620
(87) International publication number: WO 2020/070357

(57) **Abstract**

Device for controlling the application of insecticides for indoor residual spraying using a sprayer and method of applying insecticides for indoor residual spraying by the use thereof

The present invention discloses a device for controlling the application of insecticides for indoor residual spraying using a sprayer comprising a lance with a spray nozzle, a distance sensor configured to measure the distance between the spray nozzle and the surface being sprayed, an indicator of the distance measured by said sensor, and an indicator of the spraying rate and means of attachment to the sprayer lance and a pipe which allows the insecticide to pass through, and in that the indicator of the distance measured comprises a luminous device which changes colour according to the distance measured by said sensor; a method of applying insecticides for indoor residual spraying by the use thereof, the use thereof to control the application of insecticides and a sprayer which comprises a control device according to the present invention.

## Description

The present invention relates to a novel device and method for controlling the correct application of insecticides for indoor residual spraying. In addition, the present invention also discloses a sprayer which comprises said device for controlling the correct application of insecticides and the use of said device to control the correct application of insecticides for indoor residual spraying.

Indoor residual spraying (IRS), together with long-lasting insecticidal nets (LLIN), is one of the most common methods of reducing or interrupting the transmission of malaria and other vector-borne diseases. Said vectors are usually mosquitos or similar insects.

Indoor residual spraying consists in the application of long-lasting insecticides with residual action to the surfaces on which the vectors of malaria or other diseases may rest, such as internal house walls, ceilings, etc., where said vectors may come in contact with the insecticide. The effectiveness of indoor residual spraying as an intervention to control malaria lies in the fact that many important vectors of malaria are endophilic. In other words, when looking for blood to ingest, said vectors enter dwellings and rest on walls, ceilings or other internal surfaces before or after feeding. When the vector comes in contact with a sprayed surface, said vector absorbs a lethal dose of insecticide, causing death or a drastic reduction in life expectancy.

If applied correctly, indoor residual spraying is highly effective. However, exhaustive and rigorous planning, management, application and supervision are required. For indoor residual spraying to be effective, it is very important that the insecticide is applied to walls in the recommended doses. Accordingly, operators must be trained to apply the insecticide uniformly to walls following a specific spraying technique. However, numerous tests have indicated that variability in the dose of insecticide applied to walls (in-situ measurements have shown that up to 70% of houses are sprayed with a lower dose than that required) significantly influences the effectiveness and cost of indoor residual spraying interventions. The main cause of variability in the dose of insecticide applied is human error, as it is not easy to spray following the appropriate technique due mainly to a lack of preparation, guidance and information, and also to inappropriate and poorly maintained technical means.

Indoor residual spraying to interrupt the transmission of malaria and/or other vector-borne diseases is usually carried out in developing countries and/or in countries with limited purchasing power, which means that to extend the use of a device that helps control the variability of the dose of insecticide applied, said device must be low cost, as otherwise the local population and authorities may not be able to acquire said device. As well as having a relatively low purchase price, it is important that said control device should be easy to operate and strong, making said device difficult to break, which breakage would lead to repair and/or replacement costs. In developing countries, said repair and/or replacement costs could be unacceptable.

An object of the present invention is to disclose a device which helps overcome the problems of variability in the dose of insecticide applied, greatly reducing the human error associated with indoor residual spraying, said device being low cost, easy to operate and strong. Accordingly, the present invention discloses a device for controlling the application of insecticides for indoor residual spraying using a sprayer comprising a lance with a spray nozzle, which comprises a distance sensor configured to measure the distance between the spray nozzle and the surface being sprayed, an indicator of the distance measured by said sensor, and an indicator of the spraying rate. More specifically, the present invention discloses a device for controlling the application of insecticides for indoor residual spraying using a sprayer which comprises a lance with a spray nozzle, a distance sensor configured to measure the distance between the spray nozzle and the surface being sprayed, an indicator of the distance measured by said sensor, and an indicator of the spraying rate, and which comprises means of attachment to the sprayer lance and a pipe which allows the insecticide to pass through, one of the ends of said pipe being attached to the spray nozzle of the sprayer by said attachment means, and wherein the indicator of the distance measured by the distance sensor comprises a luminous device which changes colour according to the distance measured by said sensor.

As well as reducing the variability of the dose of insecticide applied, owing to the help that the present invention gives the sprayer operator, the present invention also has the advantage of reducing the operator training required as, since said operator can rely on the assistance provided by the invention, it is easier to acquire the correct spraying technique. Internal, that is not public, tests have shown that the present invention helps achieve up to three times less variability in the dose applied compared to that obtained by the same operator spraying without the aid of the invention.

As well as the above, the device according to the present invention has the advantage of robustness, ease of use and relatively low production costs, making said device easier to use and distribute in low-income countries. In addition, the weight of said device is relatively low, which helps prevent increased operator fatigue.

As well as the above-mentioned advantages, the device according to the present invention may be very accurate by measuring the spraying distance (approximately ± 5%, for example) in different working conditions, that is, on different surfaces (wood, brick, steel, painted wall, ceramics, etc.) of different colours, with different lighting levels (darkness, daylight, artificial light, etc.) and with the sprayer lance at different angles (horizontal, at 45 degrees, etc.).

Because the control device according to the present invention is attached to the sprayer lance, and more specifically, to the spray nozzle thereof, the sprayer lance and nozzle can move while rigidly connected to the control device according to the present invention, thus making it easier for said control device to measure the distances correctly, and making it easier for the operator to detect the signals emitted by said control device, since said control device remains within the visual field of the operator when carrying out the spraying work. When carrying out spraying work, the operator looks at the surface or wall being sprayed and at the lance and spray nozzle to check that the spraying liquid is directed correctly, and as the control device according to the present invention is attached to the lance, said control device remains within the visual field of the operator while carrying out the spraying work.

Advantageously, the luminous device may display three different colours, a first colour indicating that the distance to the surface being sprayed is too small, a second colour indicating that the distance to the surface being sprayed is correct and a third colour indicating that the distance to the surface being sprayed is too great. Advantageously, the luminous device comprises a LED. Embodiments also exist where the luminous device comprises a light bulb, a plurality of light bulbs (each preferably of a different colour), a plurality of LEDs (each preferably of a different colour), etc.

Alternatively, the luminous device may be replaced by another distance indicator. A different type of distance indicator which may be comprised in the present invention is, for example, a screen which shows messages indicating whether the distance to the surface being sprayed is appropriate or not. An example of said messages may be 'too close', 'correct distance' or 'too far away', as applicable. Another possible distance indicator may comprise a plurality of LEDs, for example three, configured so that when the distance is too small, for example, one LED lights up, when the distance is appropriate two LEDs light up and when the distance is too great all three light up, or vice versa.

Advantageously, the distance indicator device and, more specifically, the luminous device, is configured to indicate as correct a distance between the surface being sprayed and the spray nozzle of, for example, 45 cm ± 5cm, 45 cm being the optimal distance. Said optimal distance is quoted simply as an example and the value thereof may depend on many factors, such as the type of insecticide, the type of vector to be eliminated, the type of surface to be sprayed, etc.

Advantageously, the distance sensor measures the distance using infrared. Alternatively, the distance sensor measures the distance using a laser beam or ultrasounds. Distance sensors other than those mentioned above may also be used in the device of the present invention.

Preferably, the spraying rate indicator is configured to help the operator maintain a spraying speed of about 2.5 s/m (where s are seconds and m metres). Said spraying speed is that which provides a sufficient dose of insecticide for said insecticide to have the proper effect, while maintaining a high efficiency in the use of insecticide. However, in other embodiments, the spraying rate indicator may be configured to help maintain a spraying speed other than that mentioned above.

Preferably, the spraying rate indicator comprises a metronome. Preferably, the metronome is configured to emit a sound at one-second intervals, thus providing a rhythm to guide the operator and help maintain the correct spraying speed. Alternatively, the spraying rate indicator comprises a screen configured to give the operator visual information indicating the spraying speed. Said visual information may be, for example, a countdown, lights flashing at a given interval, etc. In both cases, the rhythm marked by the spraying rate indicator, that is, the frequency at which said regularly spaced sound is emitted, may be changed by programming.

Preferably, said means for attaching the control device to the spray nozzle are removable, that is, not permanent. The control device according to the present invention may thus be fitted to existing sprayers, or may simply make separation easier, for example in order to carry out maintenance tasks. This allows the purchase costs of indoor residual spraying equipment to be reduced considerably, as existing sprayers may be used to which the control device according to the present invention can be connected, instead of requiring the purchase of a new atomiser or sprayer which incorporates elements that provide spraying quality control. The non-permanent attachment means may include screws, clips, threads, clamps, brackets, etc.

Alternatively, said attachment means are permanent. If the connection between the control device according to the present invention and the sprayer, or more specifically, the lance thereof, is permanent, said connection may be, among others, by gluing or welding.

Embodiments also exist where the control device according to the present invention is incorporated directly, that is, manufactured in conjunction with the lance or the atomiser of a sprayer.

Preferably, the attachment between the spray nozzle and the device is produced by means of a thread. Although the control device according to the present invention preferably comprises a pipe for the insecticide to pass through, other embodiments are also possible that do not have said pipe for the insecticide to pass through. In this case, the control device is fitted preferably to the sprayer lance, that is, the control device is fitted or attached to the outer portion of the sprayer lance.

Preferably, the control device according to the present invention further comprises a flow sensor to detect insecticide passing through. More preferably, said flow sensor detects insecticide passing through said pipe which allows the insecticide to pass through. Advantageously, said flow sensor comprises a magnet connected to a resilient membrane configured to be deformed by the insecticide passing through so that said magnet comes closer to and/or moves away from a magnetic sensor.

Advantageously, the device according to the present invention comprises a control device which has a memory for storing the distance measured by the distance sensor. Preferably, said memory is a removable micro-SD, SD or similar memory card.

Preferably, said control device is configured to store the distance measured by the sensor only when the flow sensor detects insecticide passing through. This ensures that the data stored have been obtained when the operator was spraying the insecticide, thus obtaining more reliable data for later analysis.

Preferably, said control device comprises means of transmitting the stored information to a computer, mobile telephone and/or tablet. Said transmission means may be via cable through a USB, micro-USB, USB Type-C interface etc. and/or wirelessly via Wi-Fi, Bluetooth, etc.

Advantageously, said information transferred to a computer, mobile telephone and/or tablet is analysed by a computer program or mobile application, as appropriate, thus obtaining data on the quality of the insecticide spraying carried out, that is, whether the spraying was carried out correctly, very correctly, inadequately, very inadequately, etc. and on the percentage of the area sprayed, that is, the area percentage correctly sprayed, the area percentage with a lower than optimal dose (moderate or high) and the area percentage with a dose greater than the optimal dose (moderate or high).

Preferably, the device according to the present invention is powered by at least one small battery. Alternatively, the device may be supplied by at least one large battery or set of batteries.

Preferably, the device according to the present invention comprises a cover to allow access to the interior of the device for example in order to change the battery or set of batteries that powers said device. Preferably, said cover is connected to the body of the device according to the present invention by non-permanent connection means. Said non-permanent connection means, preferably, comprise screws. Advantageously, said cover may be connected to the body of the device by a hinged connection.

Preferably, the control device according to the present invention is sealed. Accordingly, said device may have seals in the fitting areas between the different parts that form the casing of the device.

Preferably, the device according to the present invention comprises a switch configured to turn said device on and off. Advantageously, said switch is a membrane switch. Alternatively, said switch is a rocker switch or similar.

Preferably, the device according to the present invention comprises a global satellite navigation system. Advantageously, said global satellite navigation system may be, among others, GPS, GLONASS, Galileo, NAVIC and/or BeiDou. Said global satellite navigation system may function with one or more of the above-mentioned systems. In embodiments of the device that have said global satellite navigation system, the data obtained thereby may be used in the spraying analysis described above, thus allowing the quality of spraying to be ascertained according to the location, among others.

In some embodiments, the spraying rate indicator may be replaced by a spraying time indicator, said time indicator showing, among other things, the time taken to spray a given surface. Embodiments also exist that comprise a spraying rate indicator and a spraying time indicator, which complement each other.

Preferably, the control device according to the present invention comprises means of illuminating the surface to be sprayed. More preferably, said illumination means comprise one or more LEDs. However, said illumination means may also comprise one or more light bulbs or equivalent elements. In addition to illuminating the surface to be sprayed, said illumination means may also provide light to the operator who carries out the spraying.

According to another aspect of the invention, an insecticide sprayer is also disclosed which comprises a device for controlling the application of insecticides for indoor residual spraying as described above. Preferably, said sprayer comprises a lance which comprises said device for controlling the application of insecticides for indoor residual spraying.

According to another aspect of the present invention, a method of applying insecticide for indoor residual spraying using a sprayer is also disclosed which comprises the following steps:
- Arranging the spray nozzle of the sprayer at the optimal distance using a device as described above.
- Beginning application of the insecticide to the surface to be sprayed.
- Applying the insecticide at the speed marked by the spraying rate indicator of a device as described above.
- Controlling the spraying distance and speed by using a device as described above.

Preferably, said method also comprises the following steps:
- Transferring the data stored by a device as described above to a computer, tablet and/or mobile telephone.
- Automatically analysing the data relating to the application of the insecticide using a mobile application or computer program, as appropriate.
- Reading and evaluating the results obtained after the data analysis performed by the mobile application or computer program, as appropriate.

According to another aspect of the present invention, the use of a control device as described above for controlling the application of insecticides for indoor residual spraying is also disclosed.

In the present document, the expression 'indoor residual spraying', or IRS, is understood to be as defined by the World Health Organisation (WHO). In this document, the expression 'long-lasting insecticidal net', or LLIN, is understood to be as defined by the World Health Organisation (WHO). In this document the expressions atomising distance' and 'spraying distance' are equivalent and interchangeable. The expressions 'distance indicator' and 'indicator of the distance measured by the distance sensor' are used in an equivalent and interchangeable manner throughout the present document.

For a better understanding, the accompanying drawings show two embodiments of a device for controlling the application of insecticides for indoor residual spraying according to the present invention as an explanatory but non-limiting example.
- Fig. 1 shows an operator applying insecticides for indoor residual spraying using a conventional sprayer.
- Fig. 2 shows an operator applying insecticides for indoor residual spraying using a sprayer that comprises a first embodiment of a device for controlling the application of insecticides for indoor residual spraying according to the present invention.
- Fig. 3 shows schematically the operation of a first embodiment of a control device according to the present invention showing a detail in profile of the device.
- Fig. 4 is a front perspective view of a first embodiment of a control device according to the present invention.
- Fig. 5 is a rear perspective view of a first embodiment of a control device according to the present invention.
- Fig. 6 is an exploded perspective view of a first embodiment of a control device according to the present invention.
- Fig. 7 is a perspective view of a second embodiment of a control device according to the present invention.
- Fig. 8 is a view in longitudinal cross section of a second embodiment of a control device according to the present invention.
- Fig. 9 is a view in transverse cross section of a second embodiment of a control device according to the present invention.

In the figures, similar or equivalent elements have been identified with identical reference numerals.

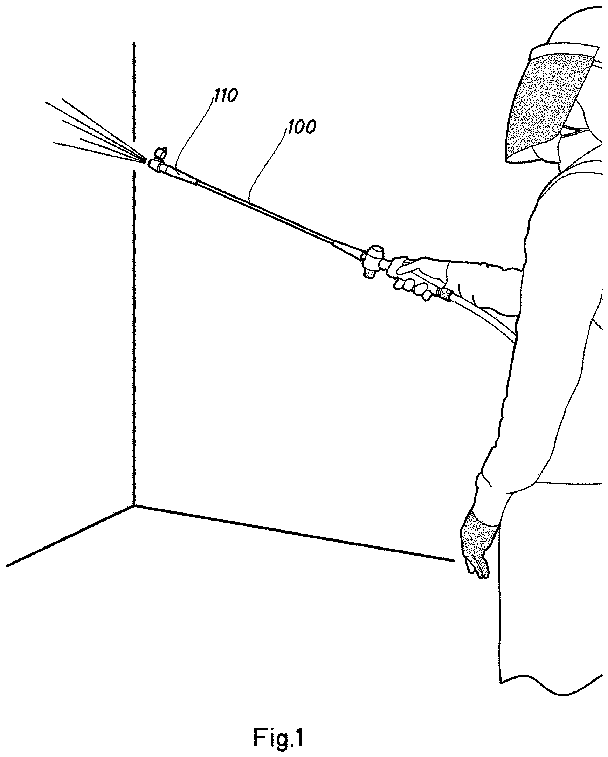

Fig. 1 shows an operator applying long-lasting insecticide with residual action to the internal walls of a building in order to reduce the density of mosquito vectors and, consequently, to reduce the transmission of malaria and other diseases transmitted by mosquitos. As can be seen, in this case the operator is applying the insecticide in a conventional manner, that is, with a sprayer comprising a lance -100- which comprises a spray nozzle -110-, but which does not have any device for guiding and/or controlling the application of the insecticide by the operator.

In this case, the dose of insecticide applied and the uniformity thereof depends to a great extent on the skill and dexterity of the operator and a considerable period of training is required by the operator to achieve a suitable spraying technique. In addition, not having a device to control the application of the insecticide by the operator makes the tasks of evaluating, controlling and planning the indoor residual spraying difficult.

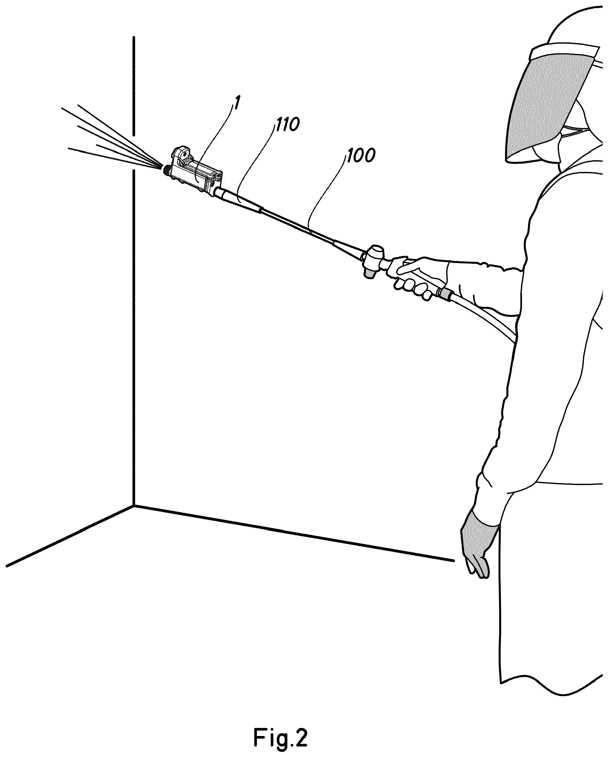

Fig. 2 shows an operator applying long-lasting insecticide with residual action in a similar way to that shown in Fig. 1, but equipped with an atomiser of which the lance -100- comprises a first embodiment of a control device -1- for the correct application of insecticides for indoor residual spraying according to the present invention. More specifically, in the embodiment shown, the control device -1- is attached to the spray nozzle -110- of the lance -100-.

Among other advantages, the control device -1- makes it easier for the operator to maintain the correct spraying distance, that is, the distance between the spray nozzle and the surface being sprayed, and to apply the insecticide at the optimal speed. Said optimal application speed is understood to be the insecticide application speed that minimises the consumption of said insecticide, but also ensures that the dose applied is sufficient for the insecticide to have the desired effect.

In the embodiment shown, the control device -1- is configured to help the operator achieve a spraying speed of 2.5 seconds/metre and to maintain a spraying distance of 45 cm. It should be understood that said distance and/or said speed may vary according to the surface being sprayed, the type of insecticide used, the type of insect dealt with, etc. Said configuration of spraying speed and atomising distance may be modified by programming the control device -1-.

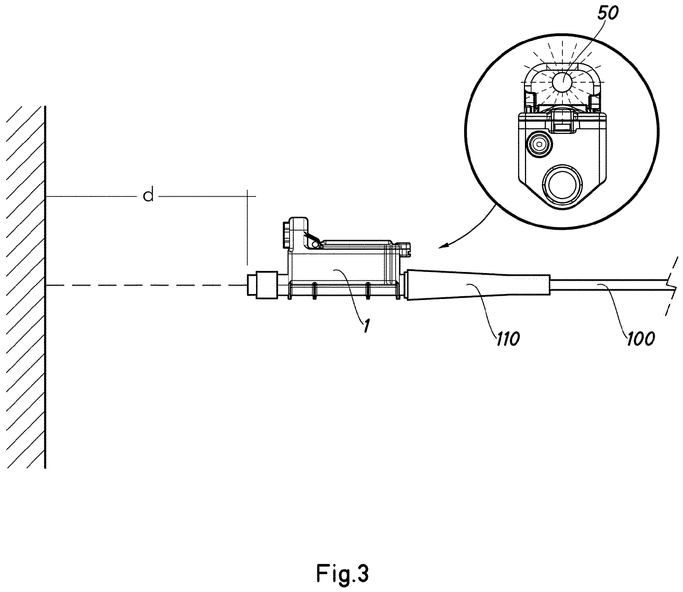

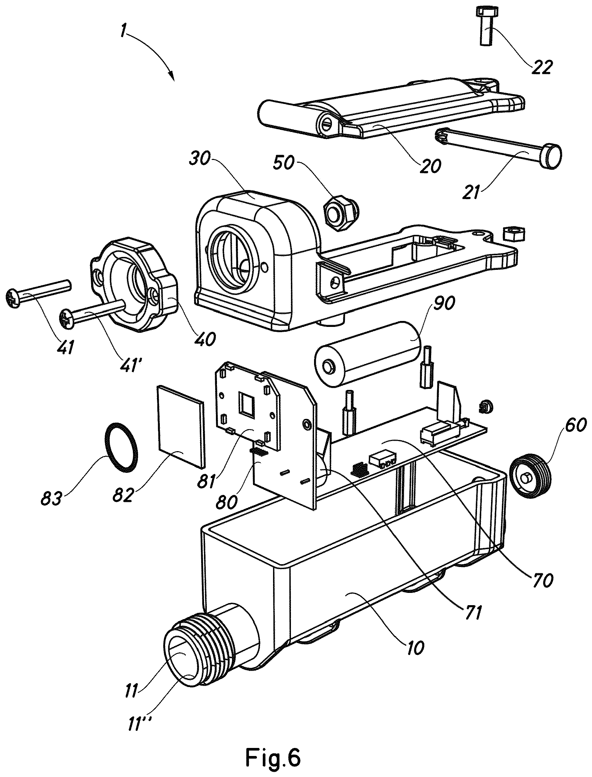

Fig. 3 shows schematically the operation of a first embodiment of a control device according to the present invention. The control device -1- measures the spraying distance -d- continuously using an infrared distance sensor -80- (see Fig. 6) and indicates to the operator using a LED -50- if said distance -d- is correct, too small or too great, thus acting as a distance indicator. Accordingly, the LED -50- has a different colour depending on whether the distance is correct, too small or too great. In the embodiment shown, the LED -50- lights up green when the spraying distance -d- is correct, red when said distance is too great (the dose applied is less than the optimal dose) and blue when the distance is too short (the dose applied is greater than the optimal dose).

In other embodiments, said distance indicator may take the form of a plurality of LEDs (one of each colour), a plurality of light bulbs, a screen that lights up in a way similar to that described earlier, a screen that displays a 'correct distance', 'excessive distance' or 'inadequate distance' message, etc.

As well as making it easier to measure correctly the spraying distance, the fact that the control device -1- is attached to the spray nozzle -110- also means that said device -1- is in the visual field of the operator carrying out the insecticide spraying, thus making it easier to see the LED -50- which indicates if the spraying distance is correct or not.

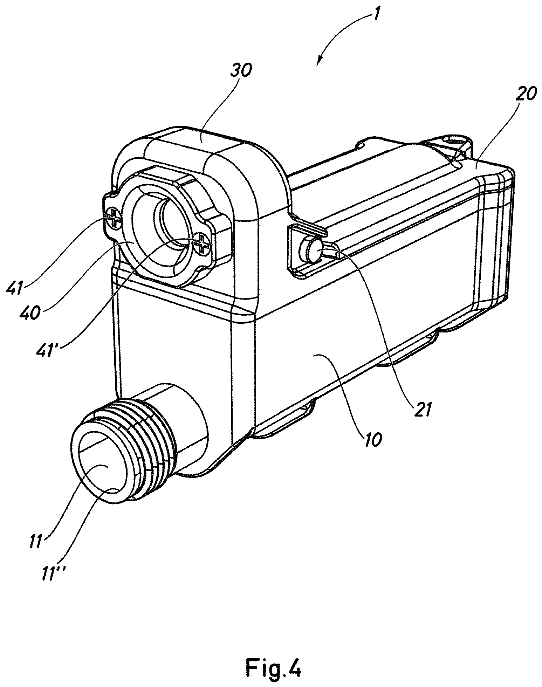

Fig. 4 is a front perspective view of a first embodiment of a control device according to the present invention. This figure shows clearly how the lower casing -10- and the upper casing -20- define the body of the control device -1-. The protector -40- of the distance sensor and the outlet end -11"- of the insecticide pipe -11- can clearly be seen on the front portion of said control device -1-.

The protector -40-, as its name suggests, acts as protection for the sensor and, in this first embodiment, is attached to the upper casing -20- by non-permanent connection means, in this case, a pair of screws -41,41'-. As can be seen, in this embodiment the sensor protector -40- is basically in the form of a ring. However, it should be noted that in other embodiments, the sensor protector may take different forms.

The outlet end -11"- of the insecticide pipe -11-, in this embodiment, comprises a thread which allows a protective cap (not shown) for said pipe to be attached.

This figure also shows the cover -20- which, as will be seen below, allows access to the interior of the body of the control device -1- in order, for example, to replace the battery -90- (see Fig. 6), which in this embodiment supplies power to said device.

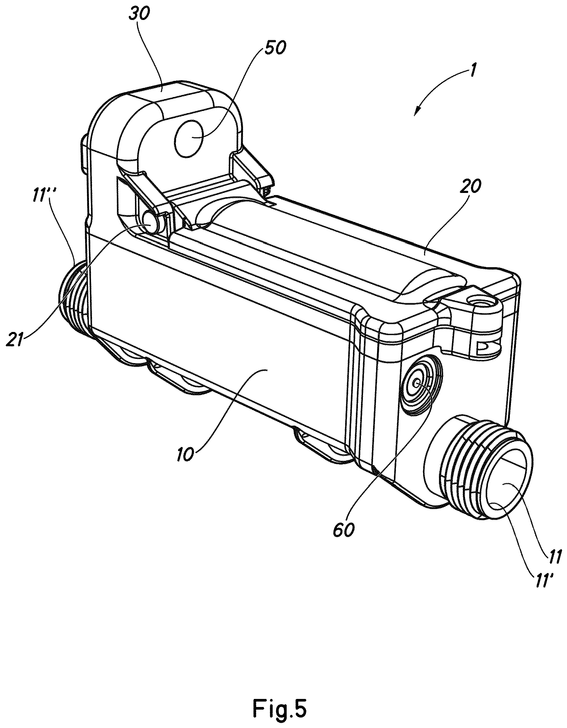

Fig. 5 is a rear perspective view of a first embodiment of a control device according to the present invention. From this rear perspective the spraying distance indicator LED -50- and the on/off switch -60- of the device -1- can be seen very clearly. Although in this embodiment the switch -60- is a membrane switch, in other embodiments the switch may be of a different typology, for example a rocker switch. The use of a membrane switch has among its advantages the fact that said switch does not project, or scarcely projects, from the lower casing -10- and that it helps to ensure that the control device -1- is hermetically sealed.

This figure also shows how the inlet end -11'- of the insecticide pipe -11-, in this first embodiment, comprises a thread. Said thread allows the control device -1- to be attached to the spray nozzle -110- of the sprayer lance -100- (see Fig. 2 and 3). In other embodiments, the connection between the device and the spray nozzle may be produced with connections other than threaded connections, such as, for example, couplings, bayonet connections, etc.

The use of a threaded connection, or other non-permanent or removable attachment means between the control device -1- and the spray nozzle -110- of the sprayer lance -100- allows said control device -1- to be used on existing sprayers, which results in a significant cost reduction as it allows existing conventional sprayers to be modernised simply by adding a control device -1- thereto, without the need to replace existing sprayers with new sprayers that incorporate some type of device for controlling the application of insecticides. The use of control devices -1- according to the present invention which comprise non-permanent and/or removable means of attachment to the spray nozzle -110- of the sprayer lance -100-, with the possibility of using the same control device -1- on various sprayers or atomisers, further reduces the cost of acquiring the equipment required for indoor residual spraying. The cost reduction is particularly important given that the countries that need indoor residual spraying are usually countries with limited economic power, and any cost reduction is therefore a considerable advantage.

The perspective used in Fig. 5 shows very clearly how the cover -20- is connected to the upper casing -30- by a hinge at the end proximal to the LED -50-. Because the cover -20- is hinged, said cover can be opened, but the cover -20- is prevented from falling or being completely removed, with the consequent risk of loss.

Fig. 6 is an exploded perspective view of a first embodiment of a control device according to the present invention, allowing the main components of the embodiment shown to be seen, including those in the previous figures that were hidden because said components are positioned inside the device -1-. Of the internal elements, the distance sensor card -80- and the control device or card -70- are remarkable. Among other elements, the control card -70- comprises the buzzer -71- which acts as a metronome.

In this exemplary embodiment, the buzzer -71- emits a sound at one-second intervals in order to give the operator spraying insecticide a sense of rhythm and help said operator maintain the correct insecticide application speed. In other embodiments, said buzzer -71- may emit a sound at intervals other than the one mentioned above.

In the embodiment shown, the control card -70- also comprises a memory for storing, among other things, the distances measured by the sensor -80- and wireless transmission means, more specifically, Bluetooth and Wi-Fi, although not shown in the figures owing to their small size.

Other embodiments may also have data transmission means via cable through an interface, for example, a micro-USB. Embodiments also exist that only comprise cable transmission means, in other words, said embodiments dispense with wireless transmission means. Other embodiments may have removable memory cards (micro-SD, SD, or similar) which store the information and then allow said information to be read on a computer or compatible device after extraction thereof from the control device. To reduce costs, embodiments also exist that have no memory or data transmission means of any kind.

Once the insecticide has been applied to the surfaces that are to be sprayed, the information stored regarding the quality of the insecticide application, more specifically the distance measured by the sensor -80-, is transmitted to a computer, mobile telephone or tablet. Once the information has been transmitted, a computer program or mobile application, as appropriate, is available which analyses the information and provides results on the quality of the insecticide application. More specifically, the application or computer program may provide data regarding the overall spraying quality (very good, good, inadequate, very inadequate, etc.) and the area percentage that was correctly sprayed, the area percentage with a dose lower than that required and the area percentage with a dose greater than that required. These data are of great help to the operator who can learn from his or her mistakes and improve their spraying technique and to fumigation programme managers and executives, who can improve the management thereof.

Regarding the distance sensor -80-, this embodiment has a spacer -81- fitted to the card thereof. Said spacer -81- in turn holds an infrared filter -82-. The embodiment shown has an O-ring seal -83- responsible for providing a hermetic seal for the closure between the upper casing -30-, the sensor protector -40- and the components of the position sensor -80- described above. As mentioned earlier, in this embodiment the connection between the sensor protector -40- and the upper casing -30- is produced by a pair of screws -41, 41'-. However, in other embodiments, the attachment between the two parts is produced by other connection means. Said connection means will preferably not be permanent in order to facilitate maintenance of the device -1-.

As can be seen, the embodiment shown is powered by a battery -90-. In this case the battery -90- is an A-type battery. However, in other embodiments the device -1- may be powered by more than one battery and of types other than A. Rechargeable large batteries or sets of batteries may also be used instead of small batteries.

This figure also clearly shows the pin -21- about which the cover -20- tilts and the attachment screw -22- responsible for attaching the cover -20- to the upper casing -30- at the end opposite the pin -21-. Said pin -21- is inserted in respective housings in the cover -20- and in the upper casing -30-.

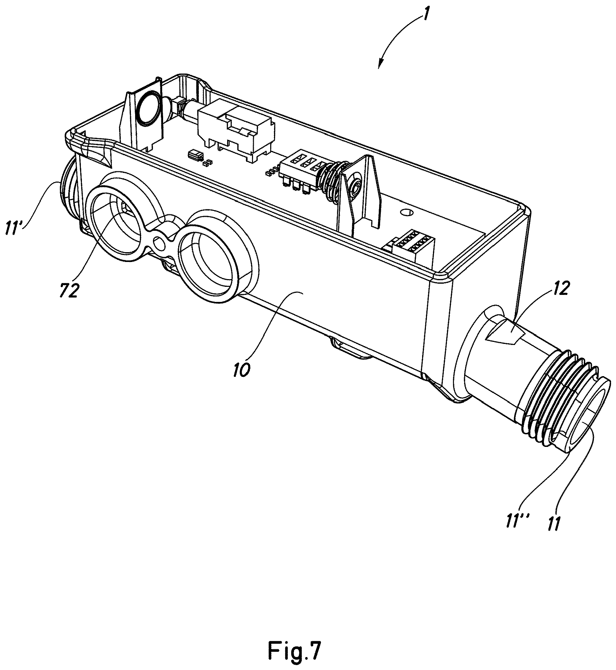

Fig. 7 to 9 show a second embodiment of a control device according to the present invention. As can be seen, the illustration of the upper casing has been omitted from Fig. 7 to 9, as have those of the distance sensor and the indicator of the distance measured by said sensor, among others. However, said second embodiment does indeed have the elements that are not illustrated.

Fig. 7 is a perspective view of a second embodiment of a control device according to the present invention. This figure gives a slight indication of the micro-USB port -72- positioned, in this case, on one of the sides of the lower casing -10- and which may be used, among other things, to download the spraying quality data to a computer or mobile device. Although not shown in this figure, said micro-USB port -72- is preferably covered by a rubber or similar cap configured to prevent liquid from entering inside the device -1-.

As can be seen, in this second embodiment, the outlet end -11"- of the pipe -11- is also threaded to allow accessories to be connected thereto, such as a cap, for example. In this case, the pipe -11- also has a groove -12- on its outer face which, among other things, allows any accessories for connection to the outlet end -11"- to be attached more securely.

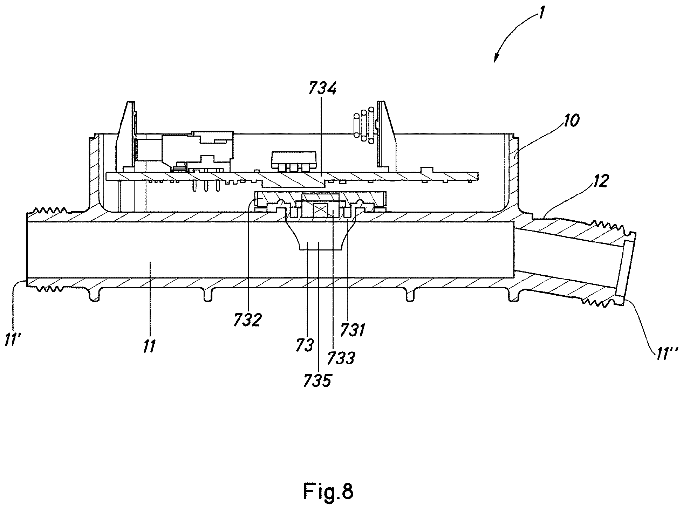

Fig. 8 is a view in longitudinal cross section of a second embodiment of the control device according to the present invention. This view in cross section clearly shows how, in this embodiment, the outlet end -11"- of the pipe -11- is slightly sloping. In the embodiment shown, said slope is downwards, that is, the outlet end -11"- slopes in the opposite direction to the upper casing (not shown, see Fig. 2 to 6). However, in other embodiments, said slope may be upwards or may not exist, that is, the outlet end -11"- may be aligned with the rest of the pipe -11-. It is also possible for said slope to be at the inlet end -11'- instead of at the outlet end -11"- and/or may be curved instead of sloping.

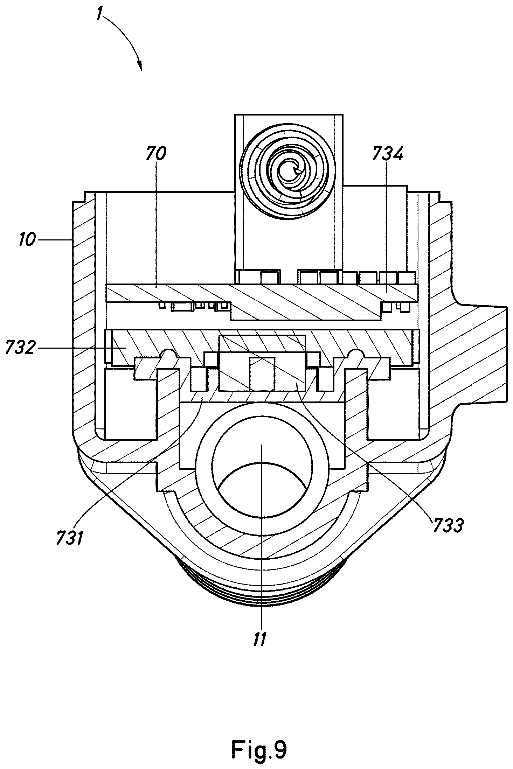

The view in longitudinal cross section in Fig. 8 and the view in transverse cross section in Fig. 9 show the difference between the first and second embodiments shown in the present document, as said second embodiment comprises a flow detector -73-. In this case, the device -1- and, more specifically, its control card -70-, is configured to only store spraying quality data (distance, speed, etc.) when the flow detector -73- detects insecticide, a phytosanitary or similar product passing through. The device -1- is therefore prevented from collecting data when the operator is not spraying, for example when the operator is resting and leaves the sprayer lance -100- lying on the floor. The presence of the flow detector -73- therefore allows more precise statistics to be obtained, as 'false positives' which could corrupt the data obtained are not collected.

Said flow detector -73- may be a flow meter, which thus provides information on whether or not a flow is passing through the pipe -11-, that is, whether the user is spraying or not, as well as the volume of insecticide or phytosanitary product sprayed, information which can be added to that stored in the memory of the device -1- for later inclusion in the results analysis to assess the spraying quality.

In the specific case of the second embodiment shown in Fig. 7 to 9, the flow detector -73- comprises a resilient membrane -731- fitted to a cylindrical wall -735-. Said resilient membrane -731- is held down by a cover -732- producing a sealed closure which prevents the fluid circulating in the pipe -11- from passing inside the device -1-, thus preventing damage to the electronics that control said device.

The flow detector -73- shown in Fig. 8 and 9 also comprise a magnet -733- secured to said resilient membrane -731-, both being configured so that when pressure rises in the pipe -11- owing to fluid passing through, said resilient membrane -731- is deformed by the pressure applied by the fluid circulating through the pipe -11-. When said resilient membrane -731- is deformed, the magnet -733- comes closer to the magnetic sensor -734- present on the control card -70-. When the magnet -733- approaches a given distance from the magnetic sensor -734-, a circuit of the control card -70- closes, which initiates data acquisition by the device, for example, the distance measured by the distance sensor -80-, the spraying time, etc. Similarly, when fluid stops circulating through the pipe -11- because the user has stopped the spraying process, the resilient membrane -731- recovers its initial position, thus moving the magnet -733- away from the magnetic sensor -734-, so that the corresponding circuit of the control card -70- opens and stops data collection. This type of flow detector -73- has the advantage of being strong and reliable, and has a relatively low cost, which is an important advantage in the spraying sector, especially in countries with limited purchasing power.

Although not seen in the figures, in the embodiments shown in Fig. 2 to 9 the connections between different parts, more specifically, the connections between different external parts, comprise rubber or similar seals in order to ensure that the device -1- is sealed. Given that said device is intended to work very close to liquids or sprayed liquids, this is an important characteristic, as any liquid filtration into the device -1- could damage the control card -70- and/or other electronic components housed inside said device.

Although the embodiments shown in Fig. 2 to 9 comprise a pipe -11- for the insecticide to pass through and said pipe -11- is attached to the spray nozzle -110- of the sprayer lance -100-, embodiments also exist which do not have said pipe. In this case, the control device according to the present invention is fitted preferably to the sprayer lance close to the spray nozzle so that said device -1- remains within the field of vision of the operator, thus making it easier for the operator who is carrying out the spraying to see the distance indicator and facilitating correct measurement of the spraying distance. Embodiments also exist in which the control device is incorporated in the sprayer during manufacture and therefore cannot be separated.

The embodiments shown in Fig. 2 to 9 do not have a global satellite navigation system. However, embodiments are also possible which comprise GPS, GLONASS, Galileo and/or BeiDou, or similar systems. If a global satellite navigation system is available, the device -1- may also store the location where the indoor residual spraying was carried out and then transmit said location to the computer, mobile telephone or tablet, so that the corresponding computer program or mobile application can generate spraying quality reports according to location, thus allowing easy comparison of the data obtained in different areas, countries, etc. The presence of a global satellite navigation system may also have uses other than those described above.

Although neither of the two embodiments shown above has a light, other embodiments of the device for controlling the application of insecticides according to the present invention may comprise such a light, which acts as a means of illuminating the enclosed area and/or spraying surface where the indoor residual spraying is being carried out. The presence of a light, preferably in the form of one or more LEDs, is particularly advantageous because, by its nature, indoor residual spraying is carried out indoors, where the lack of enough light to spray correctly is a fairly common problem. Said light may be powered from the same energy source, usually one or more batteries, as the rest of the elements of the device -1-. In embodiments that also comprise a flow sensor -73- as described above, said light may also be configured to only turn on when fluid is detected passing through the pipe -11-, that is, when the user is spraying. Said light may also be switched on by the flow sensor -73- or by an independent switch. Said light may be configured to illuminate forwards, that is, towards the wall being sprayed, and/or backwards, that is, towards the user.

Although the invention has been presented and described with reference to embodiments thereof, it will be understood that said embodiments do not limit the invention, and many structural or other details, which will be evident to persons skilled in the art after interpreting the subject matter disclosed in the present description, claims and drawings, may vary. In particular, in principle and unless explicitly stated to the contrary, all the characteristics of each of the different embodiments and alternatives shown and/or suggested may be combined with each other. Thus, all variants and equivalents will fall within the scope of the present invention if said variants and equivalents can be considered to fall within the most extensive scope of the following claims.

## Claims

1. Device for controlling the application of insecticides for indoor residual spraying using a sprayer comprising a lance with a spray nozzle, a distance sensor configured to measure the distance between the spray nozzle and the surface being sprayed, an indicator of the distance measured by said sensor, and an indicator of the spraying rate, **characterised in that** it comprises means of attachment to the sprayer lance and a pipe which allows the insecticide to pass through, one of the ends of said pipe being attached to the spray nozzle of the sprayer by said attachment means, and **in that** the indicator of the distance measured by the distance sensor comprises a luminous device which changes colour according to the distance measured by said sensor.

2. Device according to claim 1, **characterised in that** the luminous device may display three different colours, a first colour indicating that the distance to the surface being sprayed is too small, a second colour indicating that the distance to the surface being sprayed is correct and a third colour indicating that the distance to the surface being sprayed is too great.

3. Device according to either claim 1 or claim 2, **characterised in that** the luminous device comprises a LED.

4. Device according to any one of the preceding claims, **characterised in that** it comprises a control device which has a memory in which the distance measured by the distance sensor is stored.

5. Device according to claim 4, **characterised in that** said control device comprises means of transmitting the information stored to a computer, to a mobile telephone and/or to a tablet.

6. Device according to any one of the preceding claims, **characterised in that** it comprises a flow sensor for detecting insecticide passing through.

7. Device according to claim 4 or claims 5 and 6, **characterised in that** the control device is configured to store the distance measured by the sensor only when the flow sensor detects insecticide passing through.

8. Device according to either claim 6 or claim 7, **characterised in that** said flow sensor comprises a magnet connected to a resilient membrane configured to be deformed by insecticide passing through so that said magnet comes closer to and/or moves away from a magnetic sensor.

9. Device according to any one of the claims, **characterised in that** the spraying rate indicator comprises a metronome.

10. Device according to any one of the preceding claims, **characterised in that** said attachment means are removable.

11. Device according to claim 10, **characterised in that** the attachment between the spray nozzle and the device is produced by threading.

12. Device according to any one of the preceding claims, **characterised in that** it comprises a global satellite navigation system.

13. Device according to any one of the preceding claims, **characterised in that** it comprises means of illuminating the surface to be sprayed.

14. Insecticide sprayer which comprises a device according to any one of claims 1 to 13.

15. Method of applying insecticide for indoor residual spraying using a sprayer which comprises the following steps:
- Arranging the spray nozzle of the sprayer at the optimal distance using a device according to claims 1 to 13.
- Beginning application of the insecticide to the surface to be sprayed.
- Applying the insecticide at the speed marked by the spraying rate indicator of a device according to claims 1 to 13.
- Controlling the spraying distance and speed by using a device according to claims 1 to 13.

16. Method according to claim 15, **characterised in that** it also comprises the following steps:
- Transferring the data stored by a device according to claim 4 to a computer, tablet and/or mobile telephone.
- Automatically analysing the data relating to the application of the insecticide using a mobile application or computer program, as appropriate.
- Reading and evaluating the results obtained after the data analysis performed by the mobile application or computer program, as appropriate.

17. Use of a device according to claims 1 to 13 for controlling the application of insecticides for indoor residual spraying.
